Europäisches Patentamt

(19) European Patent Office

Office européen des brevets

(11) Publication number: **0 249 297**

**A2**

(12) # EUROPEAN PATENT APPLICATION

(21) Application number: **87201089.7**

(22) Date of filing: **10.06.87**

(51) Int. Cl.⁴: **B60S 3/06**

(30) Priority: **12.06.86 IT 5352186**

(43) Date of publication of application:
**16.12.87 Bulletin 87/51**

(84) Designated Contracting States:
**AT BE CH DE ES FR GB GR LI NL SE**

(71) Applicant: **Danieli, Giuseppe**
**Via Carlo Alberto, 138**
**I-04016 Sabaudia (Latina)(IT)**

(72) Inventor: **Danieli, Giuseppe**
**Via Carlo Alberto, 138**
**I-04016 Sabaudia (Latina)(IT)**

(74) Representative: **Lotti, Giorgio**
**c/o Ing. Barzanò & Zanardo Milano S.p.A. Via**
**Cernaia 20**
**I-10122 Torino(IT)**

(54) **Motor-driven brush for washing particulary the bodies of vehicles.**

(57) A motor-driven brush for washing particularly the bodies of vehicles is formed by a box-type casing carrying an electric motor fed by an outer net through a cable inserted into a handle applied onto the box-type casing; mechanical means transmit the movement of the motor to a cylindrical brush rotating about an axis substantially orthogonal to the handle; there is also provided a splash guard interposed between the handle and the brush.

Fig.1

## MOTOR-DRIVEN BRUSH FOR WASHING PARTICULARLY THE BODIES OF VEHICLES.

This invention relates to a motor-driven brush for washing particularly the bodies of vehicles.

The motorist and especially the trucker often need washing manually their vehicle, and to carry our such operation in a carefull manner many hours and hard work are required.

Furthermore, to wash a lorry having a considerable outer surface, a single person needs not less than half a day to accomplish a complete and accurate washing.

This is due to the fact that heretofore, manually operated brushes were used which required for the operator to reach directly any point of the vehicle body for being able to wash it accurately.

The unavoidable slowness of these operations renders the work difficult and long.

To obviate these disadvantages the present invention proposes the provision of a motorized brush operable and controllable remote from the point in which it works, so as to avoid the necessity for the operator to reach directly all the points of the body which has to be washed, and to prevent him from being compelled to carry out any stress for operating the brush during the washing.

For these and further objects which will be better understood later, the invention proposes to provide a motor-driven brush for washing particularly the bodies of vehicles, characterized in that it is formed by a box-type casing carrying an electric motor which is fed from an outer net through a cable inserted into a handle applied on the box-type casing; mechanical means transmit the movement of the motor to a cylindrical brush rotating about an axis substantially orthogonal to the handle; there being provided also a splash guard interposed between the handle and the brush.

The brush according to the invention will now be described with reference to the annexed drawing in which;

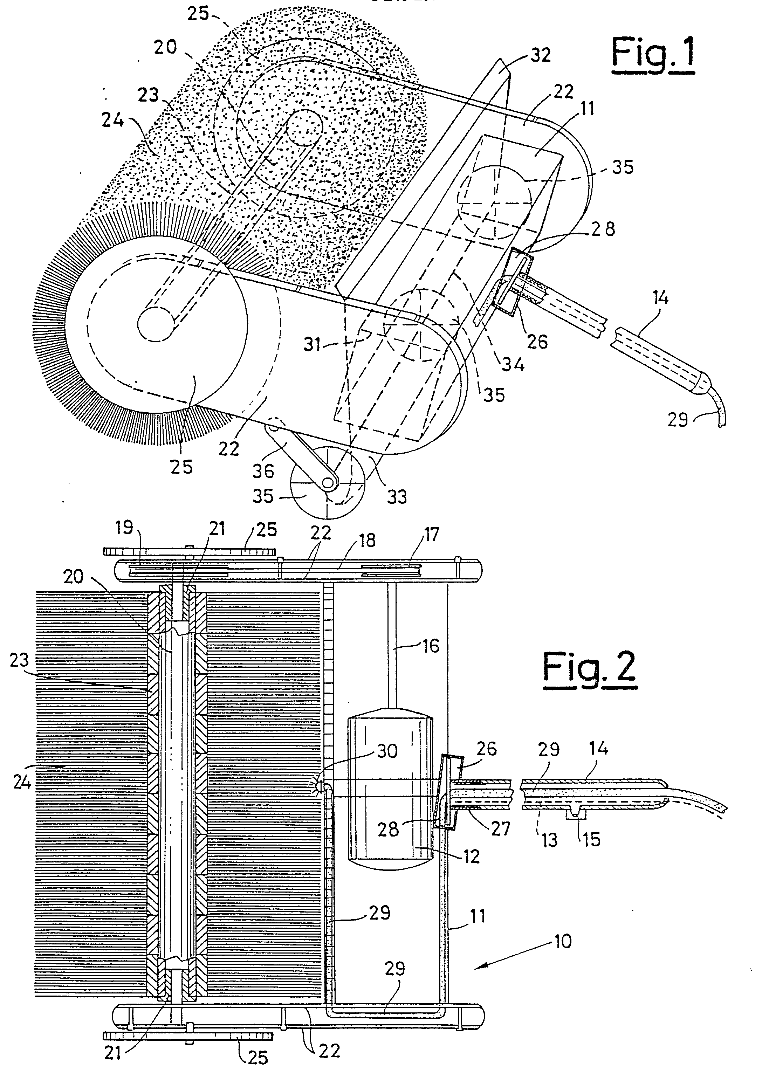

Figure 1 is a perspective view of the brush;

Figure 2 is a partially sectional plan view of the brush.

The implement according to the invention is formed by a casing 10, which in its front portion is shaped like a box 11 in which an electric motor 12 is installed.

Motor 12 receives current for its operation from an outer net through the cable 13 inserted into a handle or handgrip 14.

The outer net may be, for example, the battery of a vehicle, to which the implement may be coupled by providing the end of the cable 13 with a connection for the lighter, or the net may also be that of a house, a factory, and for such application the cable may be provided with a socket of conventional type or of any other type suitable for such use. The handle 14 may be provided with a swiych 15 for activating or disactivating the motor without the necessity for the end of the cable to be detached from its connection to the net.

The motion of the motor 12 reaches through the shaft 16, to a pulley 17 and from this latter by means of a belt 18, to a second pulley 19 to which a tube 20 is rigidly connected in rotation through a bushing 21 planted on the end of said tube, as well as at its other end, where the bushing, by being pivotally mounted onto a crakcase 22 of the casing 10, acts as a support for the tube. Said crankcase 22 serves also to cover the pulleys 17 and 19 on the other side of the casing 10.

Inserted on the tube 20 are rings 23, which are disposed side by side and from which there extend radially the bristles 24, so that the assembly of the bristles of all the rings 23 form a cylindrical brush around the tube 20.

Mounted in an idle manner on the crakcase 22 are also outer wheels 25 whose diameter is larger than that of the crankcase 22, but smaller than that of the brush 24.

Handle 14 is rigidly connected to a brushing 26 of triangular cross-section, disposed in face of the wall of the box-type body 11 and provided with a hole, through which a section of the tube 27 passes and plants itself into the handle 14 and passes through the hole of body 11. Said tube projects from a second bushing 28, which is also disposed in face of the wall of the body 11, but from inside thereof, and whose cross-section is equal to that of the outer bushing. The axis of the handle is perpendicular to the outer surface of the outer bushing 26, thus being ofset relative to the wall of the body 11 to which it is connected.Slidingly mounted within the handle 14 is also a pipe for feeding a liquid, which pipe extends along the inner walls of the body 11, beyond the crankcase 22, to terminate with the nozzle 30 in register with the brush bristles. This liquid, which may come from a pump, from a cock or from another feeding source, may be water, pure or with the addition of degreasing soap or any other product which may be desired.

Finally, inserted at the rear of the body between this latter and the brush 24 is a splash guard 31 formed by a cloth, whose upper end 32 is rigid and the lower end 33 is wound loosely on the shaft 34 of three rollers 35, of which the two extreme ones are pivotally connected to respective arms 36 which on their turn are articulated onto the crankcases 22.

The operation of the implement according to the invention is as follows.

By actuating the motor 12 by means of the switch 15, the rotary motion is transmitted to the tube 20 and hence to the brush 24 mounted thereon.

In this stage of operation the implement advances on the surface intended to be washed, supported by the wheels 25 by resting with the rollers 35, which oscillate thanks to the arms to which they are articulated, so as to follow the profile of the surface.

The implement rests on the side wheels 25 mounted in an idle manner in the crankcase 22 even in the presence of particular roughnesses which bend the bristles of the brush 24.

Since the bristles are sprinkled by the flowing liquid sprayed by the nozzle 30, the splash guard prevents this liquid from sprinkling the operator when the implement is disposed in proximity thereof.

Surface 32 shields the operator in the upper position, whilst the lower portion 33, by resting continuously on the surface to be washed, shields the operator against the plashes which are produced in a lower position relative to the implement.

Since the bristles 24 are mounted on rings 23, it is possible to substitute them together or separately after they have been worn, by simply withdrawing them from the tube 20.

Owing to the particular configuration of the socket connecting the handle 14 to the wall 11, by means of the bushings of triangular cross-section 26 and 28, the handle 14 is ofset relative to the wall 11 and rotates relative to it by singling out an ideal conical surface whose apex is formed by the pivoting point of the handle onto the wall 11. In this way, the implement may be oriented in various manners by the operator, even when held very remote from the point of operation of the brush.

## Claims

1.-A motor-driven brush for washing particularly the bodies of vehicles, characterized in that it is formed by a box-type casing carrying an electric motor which is fed from an outer net through a cable inserted into a handle applied on the box-type casing; mechanical means transmit the motion of the motor to a cylindrical brush rotating about an axis substantially orthogonal to the handle; there being provided also a splash guard interposed between the handle and the brush.

2.-A brush according to Claim 1n characterized in that the bristles of the brush are fed with a washing liquid through the handle, whose nozzle debouches near the brush, and which is fed from a hydraulic net situated outside the implement.

3.-A brush according to Claim 1, characterized in that the motor is activated or disactivated by means of a switch installed on the handle.

4.-A brush according to Claim 1, characterized in that the brush is formed by a plurality of rings on whose surface there are applied bristles oriented in a radial direction; the rings being inserted onto a tube which receives the rotary motion from the electric motor by means of a belt wound on pulleys of the tube and of the driving shaft; said transmission being contained in one of the crankcases disposed at the sides of the brush and of the body containing the motor.

5. A brush according to Claim 4, characterized in that outside the body there are installed idle wheels, in register with the tube, having a diameter smaller than that of the brush but larger than the dimentions of the crackcase.

6.-A brush according to Claim 1, characterized in that the handle is articulated to the body in such a manner as to perform relative to it a conical rotation whose apex is formed by said articulation.

Fig.1

Fig.2